(19) Europäisches Patentamt

European Patent Office

Office européen des brevets

(11) Publication number: **0 518 045 A1**

## (12) EUROPEAN PATENT APPLICATION

(21) Application number: **92107463.9**

(22) Date of filing: **30.04.92**

(51) Int. Cl.5: **C09J 123/16**, C09J 123/20, C09J 11/06, C09J 11/08

(30) Priority: **13.05.91 US 699257**

(43) Date of publication of application: **16.12.92 Bulletin 92/51**

(84) Designated Contracting States: **DE FR GB**

(71) Applicant: **FINDLEY ADHESIVES INC.**
**11320 Watertown Plank Road**
**Wauwatosa Wisconsin 53226-3413(US)**

(72) Inventor: **Haeger, Robert J.**
**5317 South 98th Street**
**Hales Corners, WI 53130(US)**

(74) Representative: **von Füner, Alexander, Dr. et al**
**Patentanwälte v. Füner, Ebbinghaus, Finck**
**Mariahilfplatz 2 & 3**
**W-8000 München 90(DE)**

(54) **Hot melt pressure sensitive adhesives.**

(57) A pressure sensitive adhesive with particular suitability, in one form, for use in combination with coated abrasive discs and which includes propylene/1-butene/ethylene terpolymer, a low molecular weight polybutene, a polybutylene rubber and a tackifying aliphatic hydrocarbon.

EP 0 518 045 A1

1. Field of the Invention:

The present invention relates to a pressure sensitive adhesive, (commonly, and hereafter, called a "PSA") and more particularly to hot melt PSAs which are useful in producing an effective, readily releasable bond between an article of interest and an underlying substrate, while simultaneously inhibiting the deposit of PSA residue on the underlying substrate due to the reaction of the PSA with constituent elements of the underlying substrate when the article of interest is removed.

2. Description of the Prior Art:

The prior art is replete with numerous examples of articles of interest which must be temporarily affixed in predetermined positions on an underlying substrate for any number of industrial applications, and which periodically need to be removed and/or replaced, as for example when they become expended or rendered useless, or when they need to be removed and used at a remote location.

For example, abrasive products sold in the form of abrasive discs are frequently designed to be releasably attached to a back-up pad which includes a base support material which is conventionally manufactured from a synthetic rubber, and which further includes a vinyl polymer sheet which is attached to the base support thereby providing an outwardly disposed attachment surface.

As should be understood, coated abrasive discs, as described above, include an abrasive material which is adhered to a backing material. The non-abrasive bearing surface of the backing material is provided with a "tacky" PSA layer. "Tackiness" in this particular application is defined as the quality possessed by an adhesive when it feels sticky or otherwise highly adhesive. It is often used to convey the idea of pressure sensitivity. A PSA hazing the appropriate amount of tackiness will generally adhere to a dry surface which is pressed against it, but will not, as a general matter stick tightly to this same surface absent the presence of other adhesive substances. Thus the PSA layer is tacky enough to provide firm adhesion to a substrate against which it is firmly pressed, but not so tacky that it cannot readily be removed. This PSA layer therefore provides a secure attachment for the abrasive disc while still permitting it to be peeled off when the time comes to replace it, as when it is expended or damaged, and which further permits it to be easily handled between uses without employing a release film. Tackiness as discussed above, is conveniently measured by the Loop Adhesion test which is described in further detail hereinafter.

In light of the advantages noted above, and in view of its suitability for a wide range of grinding environments, coated adhesive discs of the type noted above have become very popular. It has not been without its problems, however. These problems stem from the migration of plasticizers present in the vinyl polymer (typically PVC) sheet which is affixed on, or made integral with the back-up pad, to the outwardly disposed surface which is in immediate contact with the adjoining PSA layer. In this situation, a conventional, polar, PSA readily interacts with the plasticizer thereby becoming stringy. In other applications, such as in the installation of synthetic wallboard molding, the plasticizers migrate from the wallboard molding into the PSA layer thereby substantially weakening the adhesive bond.

"Stringiness" as used hereinafter describes the tendency of the PSA to adhere so tightly to the substrate that when the PSA bearing surface is separated, or divorced, from the underlying substrate, the PSA adheres to both surfaces and forms strings of adhesive between the surfaces being separated. These strings of adhesive eventually break with the attendant result that some of the PSA is deposited on the substrate in the form of a residue. If this event occurs over a prolonged period of time, it results in the deposit of a substantial layer of PSA on the substrate. Thus, and when a PSA coated abrasive disk is pressed into adhesive contact with a PSA-contaminated substrate, the adhesion which results will be between PSA and PSA, rather than with the underlying substrate itself. As should be appreciated, this bond, as a general matter, tends to be stronger than the bond between the substrate and the PSA, and thus removal of the PSA-coated abrasive disk often results in a tearing of the abrasive disk rather than the clean removal of the abrasive disk from the underlying substrate. As a general matter stringiness generally increases at elevated temperatures and low humidities.

As noted above, plasticizers combine with the PSA to cause the problems related to stringiness or the weakening of the adhesive bond. As should be understood, plasticizers are used in polyvinyl chloride (PVC) sheets to render the normally, very stiff polymer, flexible. Further, relatively large quantities are used. For example, 25 to 75 parts from 100 parts by weight of the resin. The plasticizer is often an organic ester formed from a long chain ($C_4$ - $C_{12}$) alcohol and an organic acid such as phthalic acid, adipic acid, hexanoic acid and the like. The most widely employed PVC plasticizers are polar ester plasticizers such as dioctyl phthalate. These particular plasticizers display a particularly strong tendency to migrate and cause the problems discussed above.

In an effort to alleviate the aforementioned problem, it has been suggested that one employ a high (typically about $10^6$) molecular weight PSA which is more resistant to the polar plasticizers. While such higher molecular weight PSA's are better than lower molecular weight hot melt PSAs in terms of their resistance to plasticizers, they have other disadvantages that make them an imperfect solution to the problem.

An alternative approach to solving the above-identified problem has been to employ substantially non-polar PSA materials which do not readily interact with the polar plasticizers. In this regard, these PSAs have presented other problems which have detracted from their usefulness. These other problems appear to stem from the manner in which products bearing these non-polar PSAs are manufactured and stored. For example, a PSA-backed abrasive sheet is usually manufactured into a roll and strings of linked abrasive discs are punched from the roll using conventional technology. These strings of discs are latter rolled up and packaged for sale. Thus the PSA layer of individual discs may spend a relatively long time in intimate contact with the abrasive layer of an adjoining or adjacent disk while it is stored. Many of the PSA formulations include relatively low molecular weight olefin polymer components that can migrate out of the PSA layer and into the adjoining abrasive layer. This migration leads to an unsightly discoloration or blotchiness on the adjoining surface, particularly when this surface includes a zinc stearate supersize layer. In addition, it has been discovered that it is often difficult to secure the required internal strength using these lower molecular weight components.

Therefore, it has long been known that it would be desirable to provide a hot melt PSA that can be used to attach an article of interest, such as a abrasive disc, to a plasticized PVC layer, and which will remain effective and have acceptable release properties, and which further causes no stringiness or blotchiness on either side of the article of interest even when the article is exposed to a variety of climatic conditions.

Summary of the Invention

Therefore, it is an object of the present invention to provide an improved hot melt pressure sensitive adhesive.

Another object of the present invention is to provide an improved hot melt pressure sensitive adhesive which is operable to releasably affix an article of interest to an underlying substrate while simultaneously and substantially inhibiting the deposit of the pressure sensitive adhesive onto the underlying substrate when the article of interest is removed, or alternatively weakening the adhesive bond.

Another object of the present invention is to provide, in one form of the invention, an improved hot melt pressure sensitive adhesive which may be applied to an abrasive disc, and which includes from about 3% to about 20% by weight of a propylene/1-butene/ethylene terpolymer; from about 20% to about 60% by weight of a low molecular weight polybutene; by weight, of a polyisobutylene; and a tackifying, low molecular weight aliphatic hydrocarbon in an amount to give the desired level of pressure sensivitity and tackiness.

Another object of the present invention is to provide, in one form of the invention, an improved hot melt pressure sensitive adhesive wherein the migration of its lower molecular weight components is inhibited by incorporating about 5 to 10% by weight of a low molecular weight polyethylene and/or from about 5 to about 10% by weight of a thermoplastic rubber comprising an ethylene/butylene copolymer with polystyrene end caps.

Another object of the present invention is to provide an improved hot melt pressure sensitive adhesive which, in one form of the invention, incorporates an effective amount of an antioxidant to inhibit degradation of the polymeric components during prolonged storage or use.

Another object of the present invention is to provide an improved hot melt pressure sensitive adhesive which is incorporated into an abrasive sheet material and which includes a backing material having deposited on one face thereof an abrasive layer and, on the opposed face, the PSA formulation described above.

These and other objects and advantages are achieved in a hot melt pressure sensitive adhesive of the instant invention and wherein there is provided a formulation including about 3% to about 20%, by weight, of an aliphatic polymer which is selected from the group of aliphatic polymers which include ethylene propylene rubber; ethylene propylene diene monomer; butyl rubber; and a high molecular weight polyisobutylene rubber; about 20% to about 60%, by weight, of a low molecular weight polybutene; a low molecular weight aliphatic hydrocarbon tackifying agent in an amount sufficient to give the adhesive composition the desired level of pressure sensitivity; and about 4% to about 16%, by weight, of a polyethylene wax.

3

DETAILED DESCRIPTION OF THE INVENTION

The proportions of the components described above can be varied within the general ranges specified hereinafter to provide different combinations of properties and thereby achieve the laudable benefits noted earlier. While the desired overall properties are achieved by balancing the relative proportions of the individual components, it is possible to identify functions that are predominantly performed by one or more of the individual components.

First Form

As discussed earlier the present invention is operable to provide a strong, yet readily releasable bond, between an article of interest, (not shown), such as abrasive disc and an underlying substrate such as a back-up pad, which is manufactured from synthetic rubber, and which includes a supporting surface which has a PVC polymer based sheet attached or made integral therewith. While the first form of this invention describes a formulation which can be employed with great success with abrasive discs having the construction and characteristics described hereinafter, it should be understood that the hot melt pressure sensitive adhesive of the present invention is not limited to this particular article of interest, but may be used in combination with many different types of articles which may need to be releasably affixed to a similar underlying substrate for a wide range of end uses and purposes. In the first form of the invention, the hot melt pressure sensitive adhesive includes a propylene/1-butene/ethylene terpolymer which contributes significant internal strength to the overall composition. The polymer selected, therefore, should be capable of performing this function. Such polymers typically have a melt viscosity of about 100,000 mPa.sec. (at 190°C), a (ring and ball) softening point of at least about 120°C, and a melt index of not greater than 3, although conceivably higher melt index materials could perhaps be employed. Moreover, these same terpolymers are commercially available and are identified as "Vestoplast" polymers which are available from Chemische Werke Hüls AG.

In the first form of the invention the above-identified terpolymers can be present in a total amount of from about 3% to about 20% of the total formulation weight.

As discussed earlier, the substantially non-polar character of this first formulation appears to be attributed to the $C_4$ polymer components. These components comprise a low molecular weight polybutene and a higher molecular weight rubbery polyisobutylene.

In this regard, the lower molecular weight polybutenes are polymers composed predominantly of monolefins having four carbon atoms (85 percent to 98 percent by weight), and the balance being isoparaffins. In this first form, it has been discovered that the molecular weight of the polybutene should be in the range of about 300-3000 (as determined by Microlab Osmometer). Commercially available polymers, which are particularly useful in the first form of the invention, are available under the trade name "Indopol" and which are manufactured and sold by Amoco Chemicals. The polybutenes can be used in amounts of about 20 percent to about 60 percent, by weight, of the adhesive composition.

The substantially non-polar character of the present formulation appears to be further enhanced by the presence of polyisobutylenes. The polyisobutylenes which are particularly useful in the adhesive compositions of this invention are highly paraffinic hydrocarbon polymers which are composed of long straight-chain molecules having terminal unsaturation only. The preferred isobutylene polymer is a butyl rubber. The term "butyl rubber" as used hereinafter includes polyisobutylene itself as well as rubbery copolymers of isobutylene with a diolefin containing 4 to 14 carbon atoms, usually isoprene, but diolefins such as butadiene, dimethyl butadiene and pentadiene may also be used with equal success. These copolymers generally contain 85 to 99.5 parts by weight of the olefin and 15 to 0.5 parts by weight of the diolefin. A commercially available butyl rubber is marketed under the trade name "Vistanex" and is available from Enjay Chemical Company. This particular butyl rubber has a Staudinger molecular weight of 20,000 to 80,000. Furthermore, Vistanex L80 and L-140, which have viscosity average molecular weights of about 750,000 to about 2,350,000, respectively, appear particularly useful in the first form of the adhesive composition of this invention. The above-identified polyisobutylenes can be used in amounts of about 3% to about 20% by weight of the adhesive composition, and preferably about 10 percent to 15 percent by weight.

It should be understood that exceeding the upper end of the specified range for the polybutene, discussed above, can lead to significant problems vis-a-vis the use of the present adhesives in combination with abrasive discs. As discussed earlier, when the present invention is employed in combination with abrasive discs which are stored under conditions wherein the adhesive layer may be pressed into contact with an adjoining abrasive surface, a blotchiness or discoloration of the abrasive surface may occur. This is

4

because the lower molecular weight components of the pressure sensitive adhesive tend to migrate to the PSA surface and then transfer to the adjoining contiguous abrasive surfaces, producing the unsightly blotchiness.

To counteract this problem it has been discovered that it is desirable to add a component that substantially retards migration of the lower molecular weight components. The preferred retardant used in the present invention to prevent migration includes a lower molecular weight polyethylene wax having a Brookfield viscosity (at 140°C) of less than 200 cps. A commercially suitable polyethylene wax is available from Allied Chemical and is marketed under the tradename "A-C 617". The most preferred formulation of the first form of the invention includes a polyethylene wax having a range from about 5 to about 10% by weight and preferably from about 6 to 8% by weight.

In addition, an alternative or, additional retardant may be employed. More particularly, a thermoplastic rubber including a copolymer of ethylene and butylene having polystyrene end caps. In this substance, the end caps give it a polar character, however, its polar character is not so great as to increase significantly the ease with which a polar plasticizer can migrate into the adjoining PSA. It has been discovered, however, that it is desirable that the weight percent of the styrene end caps should be at least about 5% but generally less than about 20% and preferably less than about 15% of the total weight of the capped copolymer weight. A commercially suitable rubbery copolymer for the purpose described above is sold under the tradename Kraton GX1657 and which is manufactured by the Shell Chemical Co. In this first form of the invention the rubbery copolymer is about 5% to 10% and more preferably from about 6% to 8% by weight.

The formulation of the first form of the invention also includes a low molecular weight aliphatic hydrocarbon tackifying agent. In this regard, it should be understood that this material controls the level of pressure sensitivity in the overall formulation. The tackifying agent of the present invention can be a hydrocarbon resin, a synthetic polyterpene or mixed olefin/diolefin polymers. Further, the tackifying agent should have an overall non-polar character and preferably have a relatively narrow molecular weight distribution. A commercially suitable tackifying agent is marketed by Hercules' under the tradename "Piccotac" 95 aliphatic hydrocarbon resins. The amount of this tackifying agent that may be present in the first form of the invention can be from about 25% to about 45% by weight but the formulations which appear to have the greatest utility as PSA's for use in conjunction with abrasive sheets include from about 30% about 50% and more preferably about 32% to about 38% by weight of the total formulation weight.

The first form of the invention preferably includes an effective amount of an antioxidant. The commercially available antioxidants are well known in the industry, and are marked under the trade names, "Ionox" 220 and 330, [tris(di-t-butyl-p-hydroxybenzyl)-trimethylbenzene]; "Dalpac" 4C2, [6-di(t-butyl)-p-cresol]; "Nagawhite", (alkylated bisphenol); "Butyle Zimate", (zinc dibutyl dithiocarbamate); and "Ethyl" 702, [4,4-methylene bis(2,6-di-tert-butyl-phenol). A particularly effective antioxidant is "Irganox" 1010 which is identified as tetrakis[methylene-3-(3',5'-di-t-butyl-4'- hydroxypheny)propionate]methane. Of these, "Irganox" 1010 is the preferred antioxidant. The amount used is generally less than about 1% and preferably less than about 0.5% of the total formulation weight.

As earlier discussed, the strength of the present PSA was conventionally measured by employing the 180° Peel Adhesion technique described in Test Method PSTC-1 and which was developed by the Specifications and Technical Committee of the Pressure Sensitive Tape Council. As should be understood, this test determined that the PSA of the first form of the invention had a peel adhesion of from about 30 to about 90, and more preferably about 35 to about 50, oz/inch width.

Furthermore, an additional test of the "Quick Stick" performance of a PSA is the Loop Tack test which is performed on a 5 in. x 1 in. strip of a PSA bearing material made into a loop and wherein the PSA bearing surface is positioned in outwardly facing relation. In this regard, a one inch overlap of this loop is put into the jaws of a standard "Instron" machine and a stainless steel surface is brought into contact with the PSA-bearing surface of the loop for 5 seconds. The jaws are then separated at a 12 in./ minute kaw separation speed. The force registered on the Instron is the Loop Tack value. The test is conducted at a temperature of approximately 72 (+/- 2)°F and a relative humidity of approximately 40 (+/- 4)% and is designed to evaluate the tendency of the PSA to adhere to a surface directly without external pressure. Preferred PSA formulations according to the first form of the invention have a Loop Tack adhesion value of from 0.5 to 4.5, and preferably from 1.0 to 2.5 lbs/in.

As earlier discussed the preferred application of the first form of the PSA of the present invention is in combination with an abrasive sheet material which is operable to be adhered to an underlying substrate by means of the same PSA.

In this regard, the abrasive sheet can be manufactured in a number of different forms including a sheet, belt or disc. The most common practice is to manufacture a large abrasive sheet, and thereafter apply a coating PSA to the back (i.e. nonabrasive-bearing) surface. Following application of the PSA, the sheet is rolled up and stored. At a later stage, the roll is removed, and abrasive discs are punched out with the desired dimensions from the roll.

An abrasive sheet, as a general matter, includes a backing material bearing, on one surface, a layer of abrasive grits held by maker, size and often supersize coats. The backing material can be a woven or non-woven cloth but the applications in which the first form of the present invention finds its greatest utility appears to be in combination with paper abrasive coated products.

The abrasive surface is often treated with a supersize layer including a grinding aid and/or an anti-loading additive. These individual layers are applied in a polymeric carrier which is typically an acrylic polymer. As discussed earlier, lower molecular weight components of a conventional PSA can interact with this layer to produce unsightly discoloration or blotchiness on the abrasive surface and, in extreme cases, contamination of the abraded surface.

The amount of the PSA which will be applied to the nonabrasive bearing surface of the adhesive sheet will depend to a large extent on the nature of the backing substrate to which it is applied and to the abrasive layer itself. As a general matter, however, abrasive sheet applications using paper with a weight of approximately 50 lbs/3000 square feet and an 80 grit abrasive require an application layer of PSA of from about 1.5 to about 2.5 lbs/330 square feet of the substrate. Generally speaking, heavier duty paper or cloth backings usually require applications of high PSA weights whereas lighter paper stock usually need lower. Furthermore, larger grit sizes tend to require heavier substrates and application levels that are higher than that which are needed for finer grits, perhaps as high as 15 lbs/330 square feet.

The use of the novel PSA described above is found to cause little or no discoloration or blotchiness problems while still providing an effective, readily releasable bond between the abrasive sheet and the substrate.

The first form of the invention is now further described with reference to a specific formulation which is illustrative of the first form of the invention, but which should not be taken as implying any necessary limitations on the essential scope of the invention.

In each of the specific examples described hereinafter, one surface of a roll paper, (with a weight of approximately 50 lbs per 3000 square feet), was given an abrasive layer which was adhered to the paper by maker and size coats. Further, and in two of the examples, a supersize layer of zinc stearate in an acrylic polymer carrier was adhered to the paper. This abrasive roll was then printed with identifying data on the back side (nonabrasive carrying surface) and was then given a coating of a PSA having the following formulation:

8.5% of an ethylene propylene rubber (Vistalon - 404)

39.9% of a low molecular weight polybutene (Indepol H-300)

34% of a tackifying agent (Piccotac - 95)

8.6% of a polyethylene wax (A-C 617)

8.5% of a polystyrene capped ethylene/butylene copolymer (Kraton GX-1657)

0.5% of an antioxidant (Inganox 1010)

The PSA layer composed of the formulation noted above was determined to have a softening point (ASTM ring and ball procedure) of 99°C; and a 180° peel adhesion of about 5.0 lb/linear inch as determined by the testing procedures discussed earlier.

Following application of the PSA layer, linked abrasive discs were cut from the abrasive roll and the linked discs were rolled and stored at approximately 130°F for 7 days. After this time period, the rolls were examined and found free of any evidence of discoloration or blotchiness. To test the stringiness of the PSA, these same discs were placed in contact with a dioctyl phthalate plasticized vinyl sheet for 48 hours at a temperature of approximately 100°F and in an atmosphere with a substantially 20% relative humidity. Upon separation of the disc from the vinyl sheet following these testing conditions, no stringiness was observed. Furthermore, individual discs were then placed in contact with a dioctyl phthalate-plasticized polyvinyl chloride film which was carried on a synthetic rubber pad of a rotary grinding machine. These same discs were then used in a grinding operation which lasted for approximately 5 minutes on different surfaces at which time the individual discs were dulled.

The following table summarizes the results of the test noted above:

TABLE

| Disc No. | Abrasive Used | Supersize | PSA Coat (lbs/333 sq. ft.) |
|----------|---------------|-----------|----------------------------|
| 1 | 80 grit Alumina | Yes | 2.0 |
| 2 | 400 grit Alumina | Yes | 1.0 |
| 3 | 180 grit Norzon* | No | 1.6 |

*Norzon is a fixed alumina/zirconia abrasive available from the Norton Co.

The test results revealed that at no time during this test did the adhesive bond between the disc and the machine fail. Further, the abrading surface remained unstained by any PSA component. In addition, the identifying printed indicia on the back of the disc remained clear and legible.

Second Form

As earlier discussed, with respect to the first form of the invention, the PSA formulation of the present invention can be effectively utilized to releasably adhere an article of interest to an underlying substrate. In this regard, the formulation of the PSA provides an effective bond but has acceptable release properties, and further the problems attendant to stringiness, that is, the tendency of the PSA to be deposited on the underlying substrate is substantially eliminated. While the earlier discussed problem of discoloration or blotchiness creates difficulties peculiar to the use of the invention in connection with abrasive discs, it should be understood that this same problem is most troublesome and severe only with respect to particular types (grits) of abrasive surfaces. Furthermore, and depending upon the nature of the article itself, the migration or transfer of components of the PSA to an adjoining surface, which is pressed against it, as in a stored condition, may result in no detectable discoloration of that surface, and further may have no deleterious effects on the overall performance of the object. In addition, any migration or transfer of elements of the PSA to an adjoining surface could be substantially inhibited by a substantially continuous transfer sheet which could be disposed between the adjoining surfaces and which inhibits the migration of the components to the adjoining surface.

In the second form of the invention, the PSA is described as it would be employed with an article of interest and wherein the problem of discoloration or blotchiness is of no consideration or consequence. In this regard, it has been discovered that an effective hot melt pressure sensitive adhesive which produces an effective bond with acceptable release properties and which substantially eliminates stringiness due to the reaction of plasticizers present in the underlying substrate with PSA layer includes:

(1) an aliphatic resin in an amount sufficient to give the composition the desired level of pressure sensitivity;

(2) an aliphatic polymer having approximately 3% to about 20% by weight of the formulation; and

(3) an aliphatic oil having approximately 20% to about 60%, by weight of the formulation.

The aliphatic resin employed includes the tactifying agents discussed earlier with respect to the first form of the invention. Further, the aliphatic oil above includes substances such as the low molecular weight polybutene (Indepol H-300), and the aliphatic polymer includes the material Vestoplast V-4923 described above, as well as ethylene/αolefin polymers.

In the specific example described hereinafter, an abrasive sheet having substantially identical characteristics as that described in the first form of the invention and which further has an 80 grit abrasive surface, is provided on its non-abrasive carrying surface, a coat of PSA having the following formulation:

about 3% to about 20%, by weight, of an aliphatic polymer which is selected from the group of aliphatic polymers which include ethylene propylene rubber; ethylene propylene diene monomer; butyl rubber; and a high molecular weight polyisobutylene rubber; about 20% to about 60%, by weight, of a mineral oil; a low molecular weight aliphatic hydrocarbon tackifying agent in an amount sufficient to give the adhesive composition the desired level of pressure sensitivity; about 4% to about 16%, by weight, of a polyethylene wax; and about 5% to about 15%, by weight, of a thermoplastic rubber including an ethylene/butylene or ethylene/propylene copolymer with polystyrene end caps, and wherein the polystyrene end caps represent from about 5% to about 30%, by weight, of the thermoplastic rubber.

Following a testing procedure similar to that conducted with respect to the first form of the invention, it was discovered that no stringiness was observed following a separation of the adhesive sheet from the underlying substrate. Furthermore, the present formulation appeared to provide an adequate adhesive bond during a subsequent test performed under operational conditions similar to that described earlier.

A commercially available, and suitable aliphatic polymer may be selected from the group which includes, EPR (Ethylene-Propylene Rubber) and which is manufactured by Exxon Chemical and marketed under the tradename "Vistalon"; EPDM (Ethylene-propylene dienemonomer) and which is manufactured by Uniroyal Chemical under the tradename "Royalene"; Butyl Rubber and which is manufactured by Exxon Chemical and marketed under the tradename "Butyl 065"; and ethylene-butylene and which is manufactured by Rexene and marketed under the tradename "Rextane-2730".

A commercially available and suitable aliphatic or mineral oil may be selected from the group which includes napthenic-parafinic oil, and which is manufactured by WITCO, and marketed under the tradename "Kaydol"; and napthenic-parafinic oil which has a slight aromatic content, and which is manufactured by the Shell Chemical Company under the tradename "Shellflex-371".

A commercially available, and suitable aliphatic resin may be selected from the group which includes DCPD resins (Dicyclopentadiene), and which are manufactured by Exxon Chemical Company and marketed under the tradename "Escorez-5300 Series"; hydrogenated $C_9$ resins of the type manufactured by Arakawa and marketed under the tradename "Arkon p100"; hydrogenated aromatic resins of the type manufactured by the Hercules Company under the tradename "Regalrez 1095"; terpene resins of the type which are manufactured by Arizona Chemical and marketed under the tradename "Zonarez 7100"; and debutanized aromatic concentrates-B which are manufactured by Eastman Chemical and which are marketed under the tradename "Eastotac H-100".

Therefore, it will be seen that the PSA formulations of the present invention provides an efficient and convenient means by which an article of interest may be effectively and releasably attached, as by an adhesive bond, to an underlying substrate, and which further substantially impedes the deposit of PSA residue on the underlying substrate by inhibiting the reaction of components of the PSA with the migrating components of plasticizers which are present in the underlying substrate. The present PSA formulations further have been found effective, in one form of the inventions to substantially prevent discoloration or blotchiness which may occur when the formulation is used in combination with adhesive sheets.

Although the invention has been herein shown and described in what is conceived to be the most practical and preferred embodiments, it is recognized that departures may be made therefrom within the scope of the invention which is not to be limited to the illustrative details disclosed.

## Claims

1. A pressure sensitive adhesive formulation comprising:
    a. from about 10 through 50 parts by weight of an aliphatic polymer;
    b. from about 10 through 50 parts by weight of an aliphatic oil; and
    c. from about 10 through 70 parts by weight of an aliphatic resin.

2. A pressure sensitive adhesive as claimed in claim 1 wherein the aliphatic polymer is selected from the group of aliphatic polymers which include ethylene propylene rubber; ethylene-propylene diene monomer; butyl rubber; and ethylene-butylene.

3. A pressure sensitive adhesive as claimed in claims 1 or 2 wherein the aliphatic oil is selected from the group of aliphatic polymers which include napthenic-parafinic oil, and napthenic-parafinic oil which has a slight aromatic content.

4. A pressure sensitive adhesive as claimed in one of the claims 1 to 3 wherein the aliphatic resin is selected from the group of aliphatic resins which include dicyclopentadiene, hydrogenated $C_9$ resins, hydrogenated aromatic resins and dibutanized aromatic concentrates-B.

5. A pressure sensitive adhesive formulation comprising:
    a. from about 15 to about 30% by weight of a propylene/1-butene/ethylene terpolymer;
    b. from about 10 to about 20% by weight of a low molecular weight polybutene;
    c. from about 10 to about 20% by weight of polyisobutylene rubber; and
    d. a low molecular weight aliphatic hydrocarbon tackifying agent in an amount sufficient to give the formulation the desired level of pressure sensitivity.

6. A formulation according to claim 5 which additionally comprises from about 5 to about 10% by weight of a thermoplastic rubber comprising an ethylene/butylene copolymer with polystyrene end caps.

7. A formulation according to claim 6 in which the polystyrene end caps provide from 5 to 15% of the weight of the thermoplastic rubber.

8. A formulation according to one of the claims 5 to 7 which additionally comprises from about 5 to about 10% by weight of a polyethylene wax.

9. A formulation according to one of the claims 5 to 8 which additionally comprises up to about 1.0% by weight of an antioxidant.

10. A pressure sensitive adhesive formulation comprising:
   a. from about 15 to about 20% by weight of a propylene/1-butene/ethylene terpolymer;
   b. from about 15 to about 20% by weight of a low molecular weight polybutene;
   c. from about 10 to about 15% by weight of a polyisobutylene rubber;
   d. from about 30 to about 45% by weight of a low molecular weight aliphatic hydrocarbon tackifying agent;
   e. from about 5 to about 10% by weight of a polyethylene wax; and
   f. from about 5 to about 10% by weight of a thermoplastic rubber including an ethylene/butylene copolymer with polystyrene end caps and wherein the end caps represent from about 5 to about 15% of the weight of the thermoplastic rubber.

11. A formulation according to claim 10 which additionally comprises up to 0.5% by weight of an antioxidant.

12. A formulation according to claim 11 in which the antioxidant is tetrakis[methylene(3,5-di-tert-butyl-4-hydroxyhydrocinnamate)methane].

13. A pressure sensitive adhesive composition for use in combination with a substrate, and wherein the substrate and the pressure sensitive adhesive composition are pressed into temporary adhesive contact with an adjoining surface thereby creating a boundary area between the pressure sensitive adhesive composition and the adjoining surface, and wherein the adjoining surface includes a plasticizer which migrates to the boundary area, and wherein the pressure sensitive adhesive composition substantially resists reaction with the plasticizer thereby substantially inhibiting the deposit of an adhesive residue on the adjoining surface when the substrate is subsequently removed therefrom, the pressure sensitive adhesive composition comprising:

   about 3% to about 20%, by weight, of an aliphatic polymer which has a melt index not greater than 3, and which is selected from the group of aliphatic polymers which include, an unmodified ethylene propylene rubber; ethylene-propylene diene monomer; butyl rubber; and a high molecular weight polyisobutylene rubber;

   about 20% to about 60%, by weight, of a low molecular weight polybutene;

   a low molecular weight aliphatic hydrocarbon tackifying agent in an amount sufficient to give the adhesive composition the desired level of pressure sensitivity;

   about 4% to about 16%, by weight, of a polyethylene wax; and

   about 5% to about 15%, by weight, of a thermoplastic rubber including an ethylene/butylene or an ethylene/propylene copolymer with polystyrene end caps, and wherein the polystyrene end caps represent from about 5% to about 30%, by weight, of the thermoplastic rubber.

14. A pressure sensitive adhesive formulation for use in combination with a substrate, and wherein the pressure sensitive adhesive formulation is applied on the substrate thereby forming a boundary area between the pressure sensitive adhesive and the substrate, and wherein the substrate is subsequently pressed into contact with an adjoining surface thereby forming an adhesive bond with the adjoining surface, and wherein the substrate includes plasticizers which migrate to the boundary area, and wherein the pressure sensitive adhesive substantially resists reaction with the plasticizer thereby substantially prohibiting the deterioration of the adhesive bond the pressure sensitive adhesive formulation comprising:

about 3% to about 20%, by weight, of an aliphatic polymer which has a melt index not greater than 3 and which is selected from the group of aliphatic polymers which include, an unmodified ethylene propylene rubber; ethylene-propylene diene monomer; butyl rubber; and a high molecular weight polyisobutylene rubber;

about 20% to about 60%, by weight, of a low molecular weight polybutene;

a low molecular weight aliphatic hydrocarbon tackifying agent in an amount sufficient to give the adhesive composition the desired level of pressure sensitivity;

about 4% to about 16%, by weight, of a polyethylene wax; and

about 5% to about 15%, by weight, of a thermoplastic rubber including an ethylene/butylene or an ethylene/propylene copolymer with polystyrene end caps, and wherein the polystyrene end caps represent from about 5% to about 30%, by weight, of the thermoplastic rubber.

15. A pressure sensitive adhesive composition for use in adhering an object of interest to an adjoining surface, and wherein the pressure sensitive adhesive composition substantially resists reaction with a plasticizer which migrates from the object of interest or the adjoining surface, the pressure sensitive adhesive composition comprising:

about 3% to about 20%, by weight, of an aliphatic polymer which has a melt index not greater than 3, and which is selected from the group of aliphatic polymers which include, an unmodified ethylene propylene rubber; ethylene-propylene diene monomer; butyl rubber; and a high molecular weight polyisobutylene rubber;

about 20% to about 60%, by weight, of a low molecular weight polybutene;

a low molecular weight aliphatic hydrocarbon tackifying agent in an amount sufficient to give the adhesive composition the desired level of pressure sensitivity;

about 4% to about 16%, by weight, of a polyethylene wax; and

about 5% to about 15%, by weight, of a thermoplastic rubber including an ethylene/butylene or an ethylene/propylene copolymer with polystyrene end caps, and wherein the polystyrene end caps represent from about 5% to about 30%, by weight, of the thermoplastic rubber.

16. A pressure sensitive adhesive composition for adhesively bonding an object of interest to an adjoining surface, and wherein the pressure sensitive adhesive composition substantially resists reaction with a plasticizer which migrates from the object of interest or the adjoining surface thereby substantially inhibiting the formation of an adhesive residue or the substantial weakening of the adhesive bond, the pressure sensitive adhesive composition comprising:

about 3% to about 20%, by weight, of an aliphatic polymer which is selected from the group of aliphatic polymers which include ethylene propylene rubber; ethylene propylene diene monomer; butyl rubber; and a high molecular weight polyisobutylene rubber;

about 20% to about 60%, by weight, of a mineral oil;

a low molecular weight aliphatic hydrocarbon tackifying agent in an amount sufficient to give the adhesive composition the desired level of pressure sensitivity;

about 4% to about 16%, by weight, of a polyethylene wax; and

about 5% to about 15%, by weight, of a thermoplastic rubber including an ethylene/butylene or an ethylene/propylene copolymer with polystyrene end caps, and wherein the polystyrene end caps represent from about 5% to about 30%, by weight, of the thermoplastic rubber.

**17.** A pressure sensitive adhesive composition for adhesively bonding an object of interest to an adjoining surface, and wherein the pressure sensitive adhesive composition substantially resists reaction with a plasticizer which migrates from the object of interest or the adjoining surface thereby substantially inhibiting the formation of an adhesive residue or the substantial weakening of the adhesive bond, the pressure sensitive adhesive composition comprising:

about 3% to about 30%, by weight, of an aliphatic polymer which is selected from the group of aliphatic polymers which include ethylene propylene rubber; ethylene propylene diene monomer; butyl rubber; and a high molecular weight polyisobutylene rubber;

about 20% to about 60%, by weight, of a low molecular weight polybutene;

a low molecular weight aliphatic hydrocarbon tackifying agent in an amount sufficient to give the adhesive composition the desired level of pressure sensitivity; and

about 4% to about 16%, by weight, of a polyethylene wax.

## DOCUMENTS CONSIDERED TO BE RELEVANT

EP 92107463.9

| Category | Citation of document with indication, where appropriate, of relevant passages | Relevant to claim | CLASSIFICATION OF THE APPLICATION (Int. Cl.5) |
|---|---|---|---|
| X | EP - A - 0 331 410 (SHELL OIL) <br> * Claims 1-12; page 3, lines 39-41 * | 1-5,8-12,17 | C 09 J 123/16 <br> C 09 J 123/20 <br> C 09 J 11/06 <br> C 09 J 11/08 |
| X | US - A - 4 857 594 (LAKSHMANAN) <br> * Claims * | 1-11 | |
| A | EP - A - 0 314 495 (SHELL OIL) <br> * Claims 1-8; page 1, lines 47,48 * | 1-5,8-12,17 | |
| A | US - A - 4 826 909 (LAKSHMANAN) <br> * Claims; column 2, lines 35-61 * | 1-5 | |
| A | US - A - 4 956 207 (KAUFFMAN) <br> * Claims * | 1-5,8-11,17 | TECHNICAL FIELDS SEARCHED (Int. Cl.5) <br><br> C 09 J <br> B 24 D |

The present search report has been drawn up for all claims

| Place of search | Date of completion of the search | Examiner |
|---|---|---|
| VIENNA | 28-09-1992 | SCHÄFER |